# FASCICULE DE BREVET EUROPEEN

(11) **EP 1 564 969 B1**
(45) Date de publication et mention de la délivrance du brevet: **11.04.2007**
(21) Numéro de dépôt: 05290321.8
(22) Date de dépôt: 14.02.2005
(51) Int. Cl.: H04M 1/02, H04M 1/725

(54) **Terminal portable multifonction à éléments de boitier rotatifs superposés**
Tragbares Multifunktionsendgerät mit drehbaren und überlappenden Gehäuseteilen
Multifunction portable terminal having overlapping and rotating case elements

(30) Priorité: 16.02.2004 FR 0401518
(43) Date de publication de la demande: 17.08.2005
(73) Titulaire: Sagem Communication, 75015 Paris (FR)
(72) Inventeur: Romao, Fernando, 78360 Montesson (FR)
(74) Mandataire: Fruchard, Guy

(56) Documents cités:
- US-A1- 2003 114 198
- US-A1- 2003 119 569
- PATENT ABSTRACTS OF JAPAN vol. 2003, no. 11, 5 novembre 2003 (2003-11-05) & JP 2003 188970 A (KYOCERA MITA CORP), 4 juillet 2003 (2003-07-04)

## Description

La présente invention concerne un terminal portable multifonction, notamment bien que non exclusivement un terminal permettant de mettre en oeuvre des fonctions de téléphonie, d'accès à un réseau Internet, d'appareil photos, de console de jeux, de lecteur audio ou vidéo, ou d'assistant personnel (agenda, calculatrice...) ...

### ARRIERE PLAN DE L'INVENTION

L'intégration de ces fonctions dans un même terminal pose des problèmes d'ergonomie en raison de la difficulté qui existe actuellement pour la sélection d'une fonction et l'activation de celle-ci. Dans la plupart des terminaux proposés à ce jour, l'utilisateur accède aux différentes fonctions par une série de menus déroulants. Lorsque le terminal propose de nombreuses fonctions, il est donc nécessaire d'accéder successivement à de nombreux niveaux de menus pour atteindre la fonction désirée.

On a également proposé, notamment dans le document JP 2003/188970 de sélectionner le mode de fonctionnement d'un terminal multifonction par la position relative de deux éléments de boîtier montés pour pivoter l'un par rapport à l'autre autour d'un axe de symétrie contenu dans le plan d'une des faces du boîtier. Pour pouvoir pivoter l'un par rapport à l'autre, les deux éléments de boîtier ne doivent pas être appliqués l'un contre l'autre de sorte qu'il est nécessaire de prévoir un second axe de pivotement, ce qui rend la manipulation complexe et peu confortable.

### OBJET DE L'INVENTION

Le but de l'invention est de proposer un terminal multifonction d'une manipulation aisée et confortable, quelle que soit la fonction à mettre en oeuvre.

### RESUME DE L'INVENTION

En vue de la réalisation de ce but, on propose, selon l'invention, un terminal portable multifonction comportant deux éléments de boîtiers plats ayant des contours identiques présentant un axe de symétrie et articulés l'un à l'autre pour pivoter autour de l'axe de symétrie, et un organe de détection pour activer des fonctions diverses selon une position relative des deux éléments de boîtier, l'un des éléments de boîtier ayant une face portant un écran, dans lequel les éléments de boîtier sont superposés, l'axe de symétrie s'étendant perpendiculairement à la face portant l'écran, et les fonctions sont activées pour une position de coïncidence des contours des deux éléments de boîtier.

Ainsi, l'activation de l'une des fonctions principales est aisément réalisée par une simple rotation de l'un des éléments de boîtier par rapport à l'autre autour de l'axe de symétrie, la position précise d'activation de la fonction désirée étant facilement obtenue tant visuellement que tactilement par une mise en coïncidence des contours des deux éléments de boîtier.

Selon une version avantageuse de l'invention, le terminal portable comporte un organe d'application des deux éléments de boîtier l'un contre l'autre pour une position de coïncidence des contours des deux éléments de boîtier, et un organe d'écartement des éléments de boîtier pour une position de décalage des contours des éléments de boîtier. Les deux éléments de boîtier sont ainsi maintenus de façon stable dans une position d'activation d'une fonction.

Selon un autre aspect avantageux de l'invention, le terminal comporte un organe auxiliaire disposé pour être accessible pour une position décalée des éléments de boîtier. L'organe auxiliaire est ainsi protégé lors d'une utilisation du terminal selon ses fonctions principales et reste néanmoins aisément accessible par une simple rotation des éléments de boîtier l'un par rapport à l'autre.

### BREVE DESCRIPTION DES DESSINS

D'autres caractéristiques et avantages de l'invention apparaîtront encore à la lecture de la description qui suit d'un mode de réalisation particulier non limitatif de l'invention en référence aux figures ci-jointes parmi lesquelles :
- la figure 1 est une vue en perspective schématique d'un terminal portable multifonction selon l'invention dans une position d'activation d'une fonction principale,
- la figure 2 est une vue en perspective analogue à celle de la figure 1, les éléments de boîtier étant dans une position décalée donnant un accès à des organes auxiliaires,
- la figure 3 est une vue en perspective éclatée agrandie d'un mécanisme permettant une rotation et un maintien dans une position stable des éléments de boîtier.

### DESCRIPTION DETAILLEE DE L'INVENTION

En référence aux figures, le terminal portable selon l'invention comporte un élément de boîtier inférieur 1 plat, ayant un contour carré contenant par exemple les circuits électroniques et l'accumulateur d'alimentation du terminal.

Le terminal comporte également un second élément de boîtier 2 également plat et de contour carré, dont les côtés ont une longueur égale aux côtés du premier élément de boîtier 1. De façon connue en soi le second élément de boîtier comporte un écran 3, un microphone 4 auquel peut être associée une caméra de vidéo conférence et un écouteur 5. Le long des deux côtés opposés de part et d'autre de l'écran le second élément de boîtier 2 comporte une série de touches 6 dont la fonction peut varier selon la fonction principale correspondant à la position du second élément de boîtier 2 par rapport au premier élément de boîtier 1. Cette disposition particulière des touches permet une utilisation aisée du terminal avec les deux mains lorsque la fonction principale activée est une fonction de jeu ou de rédaction d'un message écrit.

Les éléments de boîtier 1 et 2 sont superposés et sont montés pour pivoter l'un par rapport à l'autre autour d'un axe de symétrie 10 des contours des éléments de boîtier, c'est-à-dire dans le mode de réalisation illustré, autour d'un axe s'étendant au centre du carré perpendiculairement aux faces principales des éléments de boîtier, en particulier perpendiculairement à la face de l'élément de boîtier 2 portant l'écran 3.

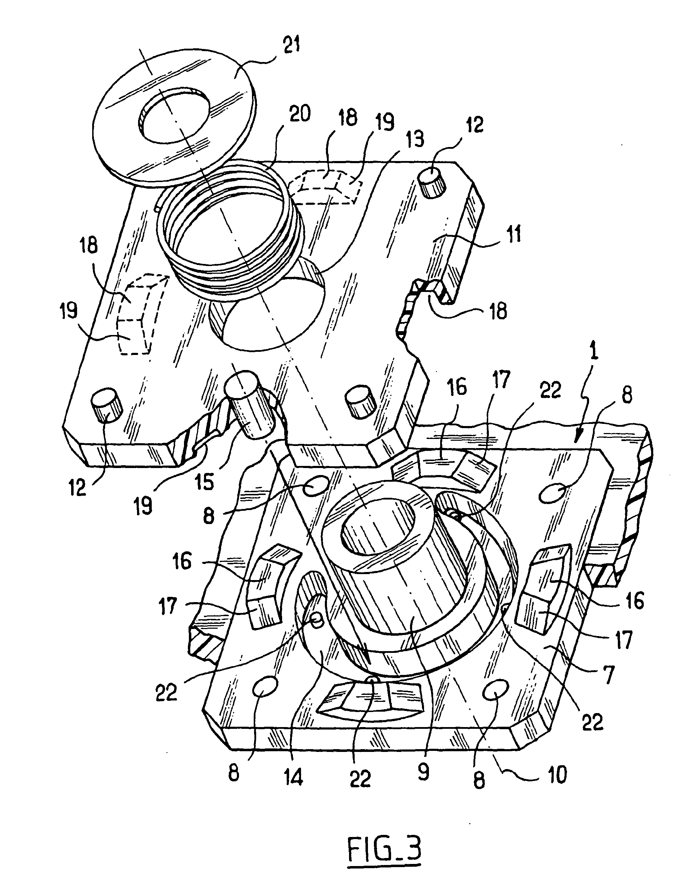

La figure 3 illustre le mécanisme permettant le pivotement des éléments de boîtier l'un par rapport à l'autre. Ce mécanisme comporte une plaque 7 encastrée dans la face supérieure de l'élément de boîtier 1 auquel elle est fixée par des pions 8 qui sont collés ou soudés lors du montage. La plaque 7 porte un pivot central tubulaire 9 centré sur l'axe de symétrie 10 du contour carré des éléments de boîtier 1 et 2. Le canal central du pivot 9 permet le passage d'un faisceau ou d'une nappe de fils non représenté assurant de façon connue en soi la liaison entre le module électronique contenu dans l'élément de boîtier inférieur 1 et les organes électroniques portés par le second élément de boîtier 2.

Le mécanisme de pivotement comprend en outre une plaque 11 qui est encastrée lors du montage dans la face inférieure du second élément de boîtier 2 auquel elle est fixée par des pions de fixation 12. La plaque 11 comporte une ouverture centrale 13 ayant un diamètre très légèrement supérieur au diamètre du pivot 9 pour pouvoir pivoter sur celui-ci avec un très faible jeu. Afin de limiter le pivotement des plaques 7 et 11 l'une par rapport à l'autre et éviter une détérioration du faisceau de fils de liaison, la plaque 7 comporte une rainure circulaire 14 s'étendant sur trois quarts de cercle et dans laquelle s'étend un pion de positionnement 15 fixé à la plaque 11 et s'étendant en saillie dans le bas.

En outre, la plaque 7 comporte des cames 16 ayant des faces extrêmes inclinées 17. Aux cames 16 correspondent des cavités 18 réalisées dans la face inférieure de la plaque 11 et dont les parois extrêmes 19 sont inclinées pour former des rampes pour les cames 16. Lors du montage, la plaque 11 est mise en coïncidence avec la plaque 7 de sorte que les cames 16 sont encastrées dans les cavités 18. La plaque 11 est maintenue appliquée sur la plaque 7 par un ressort hélicoïdal 20 disposé autour du pivot 9 au-dessus de la plaque 11 et maintenue en place par une rondelle 21 qui est soudée ou collée à l'extrémité du pivot 9.

Lors du pivotement du second élément de boîtier 2 par rapport au premier élément de boîtier 1, la plaque 11 s'écarte légèrement de la plaque 7 sous l'effet de l'interaction entre les faces extrêmes inclinées 17 des cames 16 et les rampes 19 jusqu'à ce que les éléments de boîtier aient tourné d'un quart de tour l'un par rapport à l'autre. Dans cette position les cames 16 s'encastrent dans les cavités 18 et la plaque 11 est à nouveau mise en appui contre la plaque 7, c'est-à-dire que les deux éléments de boîtier sont alors appliqués l'un contre l'autre sans jeu.

Afin de permettre un repérage du positionnement du second élément de boîtier 2 par rapport au premier élément de boîtier 1, le terminal comporte un organe de détection de position.

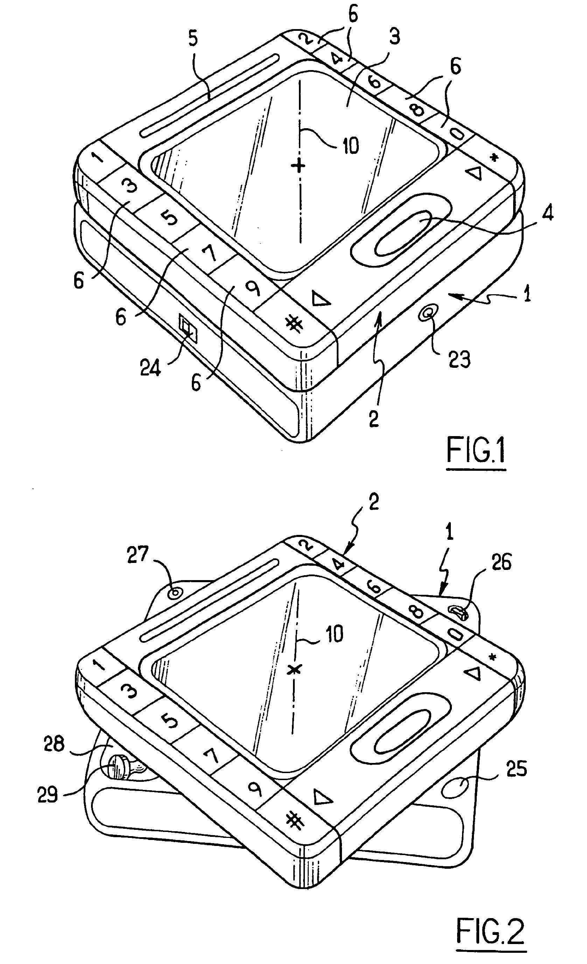

Dans le mode de réalisation illustré à titre de simple exemple, l'organe de détection comporte des capteurs 22 s'étendant dans le fond de la rainure 14 et disposés pour détecter la présence du pion de positionnement 15 en regard de l'un d'entre eux lorsque le contour du second élément de boîtier 2 est en coïncidence avec le premier élément de boîtier 1. De façon connue en soi la fonction principale correspondante est alors activée. On notera à ce propos sur la figure 1 les signes 23, 24 portés sur les faces latérales du premier élément de boîtier 1 pour indiquer à l'utilisateur la fonction principale activée lorsque le microphone 4 se trouve à l'aplomb du signe considéré.

Sur la figure 1, le signe 23 symbolise la fonction de liaison à un réseau Internet tandis que le signe 24 symbolise la fonction d'appareil photo ou de camescope.

Selon un autre aspect de l'invention, le premier élément de boîtier 1 comporte des organes auxiliaires dans les parties de cet élément de boîtier qui sont dégagées lorsque le contour du second élément de boîtier 2 est décalé par rapport au contour du premier élément de boîtier 1, comme illustré sur la figure 2.

Dans le mode de réalisation illustré, le premier élément de boîtier 1 comporte dans l'un de ses coins un détecteur d'empreintes 25 permettant d'identifier l'utilisateur lors de la mise en service du terminal. Dans un autre coin, il comporte un organe de connectique, par exemple une borne USB 26. Dans un troisième coin, l'élément de boîtier 1 comporte une prise 27 pour le branchement d'un bloc secteur permettant de recharger la batterie du terminal. Dans le quatrième coin l'élément de boîtier 1 comporte une cavité 28 dans laquelle est disposé un bouchon d'oreille 29 pouvant servir lors de l'utilisation du terminal dans sa fonction de téléphonie ou de lecteur audio.

Bien entendu, l'invention n'est pas limitée au mode de réalisation décrit et on peut y apporter des variantes de réalisation sans sortir du cadre de l'invention tel que défini par les revendications.

En particulier, bien que les éléments de boîtier aient été décrits avec des contours carrés, on peut réaliser le terminal avec des éléments de boîtier présentant une forme quelconque présentant un axe de symétrie, par exemple des éléments de boîtier de forme rectangulaire (deux positions de coïncidence), ou un polygone régulier tel qu'un hexagone (six positions de coïncidence) ou un octogone (huit positions de coïncidence)...

Pour une plus grande facilité de reconnaissance de la fonction principale correspondant à la position relative du premier élément de boîtier et du second élément de boîtier, on peut afficher cette fonction sur l'écran 3 lors de chaque passage par une position de coïncidence des contours des éléments de boîtier.

Bien que l'on ait illustré le mécanisme de pivotement avec des organes d'écartement pour des positions de décalage des éléments de boîtier, on peut réaliser le terminal selon l'invention avec un simple axe de pivotement, le repérage de la coïncidence des contours étant alors effectué seulement visuellement ou de façon tactile lorsque les parois latérales des éléments de boîtier sont alignées les unes avec les autres.

## Revendications

1. Terminal portable multifonction comportant deux éléments de boîtiers plats (1, 2) ayant des contours identiques présentant un axe de symétrie (10) et articulés l'un à l'autre pour pivoter autour de l'axe de symétrie, et un organe de détection (22) pour activer des fonctions diverses selon une position relative des deux éléments de boîtier, l'un des éléments de boîtier (2) ayant une face portant un écran (3), **caractérisé en ce que** les éléments de boîtier (1, 2) sont superposés, l'axe de symétrie s'étendant perpendiculairement à la face portant l'écran, et **en ce que** les fonctions sont activées pour une position de coïncidence des contours des deux éléments de boîtier.

2. Terminal selon la revendication 1, **caractérisé en ce qu**'il comporte un organe d'application (20) des deux éléments de boîtier l'un contre l'autre pour une position de coïncidence des contours des deux éléments de boîtier, et un organe d'écartement (16) des éléments de boîtier pour une position de décalage des contours des éléments de boîtier.

3. Terminal selon la revendication 2, **caractérisé en ce que** l'organe d'application comprend un ressort (20) et l'organe d'écartement comprend au moins une came (16) coopérant avec une rampe (19).

4. Terminal selon la revendication 1, **caractérisé en ce que** les éléments de boîtier ont des contours en forme de polygones réguliers.

5. Terminal selon la revendication 4, **caractérisé en ce que** les éléments de boîtier ont des contours carrés.

6. Terminal selon la revendication 1, **caractérisé en ce que** l'un des éléments de boîtier (2) comporte des touches (6) s'étendant le long de deux bords opposés.

7. Terminal selon la revendication 1, **caractérisé en ce qu**'il comporte un organe auxiliaire (25, 26, 27, 29) disposé pour être accessible pour une position décalée des contours des deux éléments de boîtier.

8. Terminal selon la revendication 7, **caractérisé en ce que** l'organe auxiliaire (29) est disposé dans une cavité.

9. Terminal selon la revendication 7, **caractérisé en ce que** l'organe auxiliaire (25) a pour fonction d'assurer une reconnaissance de l'utilisateur lors d'une mise en route du terminal.

10. Terminal selon la revendication 7, **caractérisé en ce que** l'organe auxiliaire est un organe de connectique (26, 27).

## Claims

1. A multifunction portable terminal comprising two flat box elements (1,2) having identical outlines presenting an axis of symmetry (10), the elements being hinged to each other to pivot about the axis of symmetry, and further comprising a detector member (22) for activating a variety of functions depending on the relative position of the two box elements, one of the box elements (2) having a face carrying a screen (3), the terminal being **characterized in that** the box elements (1, 2) are superposed, the axis of symmetry extending perpendicularly to the face carrying the screen, and **in that** the functions are activated for a position in which the outlines of the two box elements coincide.

2. A terminal according to claim 1, **characterized in that** it includes a presser member (20) for pressing the two box elements against each other in a position in which the outlines of the two box elements coincide, and a spacer member (16) f or spacing the box elements apart in a position in which the outlines of the box elements are offset.

3. A terminal according to claim 2, **characterized in that** the presser member comprises a spring (20) and the spacer member comprises at least one cam (16) co-operating with a ramp (19).

4. A terminal according to claim 1, **characterized in that** the box elements have outlines in the form of regular polygons.

5. A terminal according to claim 4, **characterized in that** the box elements have square outlines.

6. A terminal according to claim 1, **characterized in that** one of the box elements (2) carries keys (6) extending along two opposite sides.

7. A terminal according to claim 1, **characterized in that** it includes an auxiliary member (25, 26, 27, 29) disposed so as to be accessible when the outline of the two box elements are in an offset position.

8. A terminal according to claim 7, **characterized in that** the auxiliary member (29) is placed in a cavity.

9. A terminal according to claim 7, **characterized in that** the auxiliary member (25) has the function of recognizing the user when the terminal is put into operation.

10. A terminal according to claim 7, **characterized in that** the auxiliary member is a connector member (26, 27).

## Patentansprüche

1. Tragbares Multifunktionsendgerät, umfassend zwei flache Gehäuseelemente (1, 2), die identische Konturen mit einer Symmetrieachse (10) haben und aneinander angelenkt sind, um sich um die Symmetrieachse zu drehen, sowie ein Erfassungselement (22), um je nach Relativposition der beiden Gehäuseelemente unterschiedliche Funktionen zu aktivieren, wobei eines der Gehäuseelemente (2) eine Fläche hat, die einen Bildschirm (3) trägt, **dadurch gekennzeichnet, dass** die Gehäuseelemente (1, 2) übereinander angeordnet sind, wobei sich die Symmetrieachse senkrecht zu der den Bildschirm tragenden Fläche erstreckt, und dass die Funktionen aktiviert werden, wenn die Konturen der beiden Gehäuseelemente in einer übereinstimmenden Position sind.

2. Endgerät nach Anspruch 1, **dadurch gekennzeichnet, dass** es ein Andruckelement (20) umfasst, um die beiden Gehäuseelemente für eine übereinstimmende Position der Konturen der beiden Gehäuseelemente aneinander in Anlage zu bringen, sowie ein Abstandselement (16), um die beiden Gehäuseelemente für eine Versatzposition der Konturen der Gehäuseelemente zueinander beabstandet zu halten.

3. Endgerät nach Anspruch 2, **dadurch gekennzeichnet, dass** das Andruckelement eine Feder (20) und das Abstandselement mindestens eine Nocke (16) umfasst, die mit einer Rampe (19) zusammenwirkt.

4. Endgerät nach Anspruch 1, **dadurch gekennzeichnet, dass** die Gehäuseelemente Konturen in Form von regelmäßigen Polygonen haben.

5. Endgerät nach Anspruch 4, **dadurch gekennzeichnet, dass** die Gehäuseelemente viereckige Konturen haben.

6. Endgerät nach Anspruch 1, **dadurch gekennzeichnet, dass** eines der Gehäuseelemente (2) Tasten (6) umfasst, die sich entlang zweier gegenüberliegender Ränder erstrecken.

7. Endgerät nach Anspruch 1, **dadurch gekennzeichnet, dass** es ein Hilfselement (25, 26, 27, 29) umfasst, das so angeordnet ist, dass es zugänglich ist, wenn die Konturen der beiden Gehäuseelemente in einer Versatzposition sind.

8. Endgerät nach Anspruch 7, **dadurch gekennzeichnet, dass** das Hilfselement (29) in einem Hohlraum angeordnet ist.

9. Endgerät nach Anspruch 7, **dadurch gekennzeichnet, dass** das Hilfselement (25) die Funktion hat, ein Wiedererkennen des Benutzers bei Inbetriebnahme des Endgeräts zu gewährleisten.

10. Endgerät nach Anspruch 7, **dadurch gekennzeichnet, dass** das Hilfselement ein elektronisches Anschlusselement (26, 27) ist.
